# EUROPÄISCHE PATENTANMELDUNG

(11) **EP 2 388 178 A2**
(43) Veröffentlichungstag der Anmeldung: **23.11.2011**
(21) Anmeldenummer: 11001201.0
(22) Anmeldetag: 15.02.2011
(51) Int. Cl.: B62D 5/09, B62D 5/00

(54) **Elektrohydraulische Lenkung**

(30) Priorität: 17.05.2010 DE 102010020722
(71) Anmelder: Robert Bosch GmbH, 70469 Stuttgart (DE)
(72) Erfinder: Neumann, Uwe, Dr., 63768 Hösbach (DE); Brummund, Stephan, Dr., 63739 Aschaffenburg (DE); Schmitz, David, 97816 Lohr am Main (DE)
(74) Vertreter: Thürer, Andreas

(57) **Zusammenfassung**

Offenbart ist eine elektrohydraulische Lenkung insbesondere für mobile Arbeitsmaschinen (z.B. aus der Land- und Forsttechnik, dem Erd- und Straßenbau oder für Material Handling) mit einer Druckmittelversorgung (10,16), von der über eine erste Zuleitung (2) ein in eine erste Lenkrichtung wirksamer erster Anschluss (A) versorgt werden kann, während über eine zweite Zuleitung (6) ein in eine zweite Lenkrichtung wirksamer zweiter Anschluss (B) versorgt werden kann. Dabei werden die beiden Zuleitungen (2,6) und weiterhin eine erste Rückleitung (4) vom ersten Anschluss (A) zu einem Tank (T) und eine zweite Rückleitung (8) vom zweiten Anschluss (B) zum Tank (T) über jeweils mindestens zwei parallele Ventile gesteuert. Damit kann bei Ausfall eines der Ventile (14,20,26,28,30,32,36,38) das zumindest eine parallel geschaltete Ventil die Steuerung der entsprechenden Zuleitungen (2,6) oder der entsprechenden Rückleitung (4,8) übernehmen.

## Beschreibung

### Beschreibung

Die Erfindung betrifft eine elektrohydraulische Lenkung gemäß dem Oberbegriff des Patentanspruchs 1.

Die Druckschriften DE 198 01 393 C1 und DE 199 18 225 A1 zeigen elektrohydraulische Lenkungen, bei denen vom Fahrzeugführer über eine herkömmliches Lenkrad und über eine mechanische oder hydraulische Hauptlenkung ein an Räder gekoppelten Hauptlenkzylinder betätigt wird. Zusätzlich ist eine "paraitele" hydraulische Notlenkungsvorrichtung mit einem entsprechenden "parallelen" Notlenkungszylinder vorgesehen.

In der Druckschrift DE 10 2007 033 990 A1 ist eine elektrohydraulische Lenkung offenbart, bei der vom Fahrzeugführer über ein hydraulisches Ventil ein Lenkzylinder vom Druckmittelstrom einer Pumpe beaufschlagt wird. Dieser Druckmittelstrom kann von der selben Pumpe über ein weiteres Ventil unterstützt werden. Dabei wird der unterstützende Druckmittelstrom in den Hauptkreis und somit in den Hauptzylinder der Lenkung gefördert.

Weiterhin sind elektrohydraulische Steer-by-Wire-Lenkungen bekannt, bei denen Lenksignale vom Fahrzeugführer elektronisch an einen hydraulische Lenkung übertragen werden. Die Druckschrift US 2008/0087014 A1 zeigt eine derartige Steer-by-Wire-Lenkung, bei der über verschiedene elektrisch betätigte Ventile Druckmittelströme zu und von zwei Kammern eines Lenkzylinders geregelt werden.

Nachteilig an der letztgenannten elektrohydraulischen Lenkung ist ihr vorrichtungstechnischer Aufwand zur sicheren Abschattung, der sich aus vier Proportionalventilen und zwei Schaltventilen zuzüglich einer Stellungsüberwachung zur Fehlererkennung ergibt.

Dem gegenüber liegt der Erfindung die Aufgabe zu Grunde, eine elektrohydraulische Lenkung zu schaffen, deren inhärente Sicherheit (Fehlertoleranz) bei einem reduzierten Aufwand gegeben ist.

Diese Aufgabe wird gelöst durch eine elektrohydraulische Lenkung mit den Merkmalen des Patentanspruchs 1.

Die erfindungsgemäße elektrohydraulische Lenkung insbesondere für mobile Arbeitsmaschinen (z.B. aus der Land- und Forsttechnik, dem Erd- und Straßenbau oder für Material Handling) hat eine Druckmittelversorgung, von der über eine erste Zuleitung ein in eine erste Lenkrichtung wirksamer erster Anschluss versorgbar ist, während über eine zweite Zuleitung ein in eine zweite Lenkrichtung wirksamer zweiter Anschluss versorgbar ist. Dabei sind die beiden Zuläufe und weiterhin eine erste Rückleitung vom ersten Anschluss zu einem Tank und eine zweite Rückleitung vom zweiten Anschluss zum Tank über jeweils mindestens zwei parallele Ventile steuerbar. Damit kann bei einem Ausfall eines der Ventile das zumindest eine parallel geschaltete Ventil die Steuerung der entsprechenden Zuleitung oder der entsprechenden Rückleitung übernehmen. Damit ist eine z.B. für eine Straßenzulassung der entsprechenden mobilen Arbeitsmaschine notwendige inhärente Sicherheit (Fehlertoleranz) bei einem reduzierten vorrichtungstechnischen Aufwand gegeben.

Weitere vorteilhafte Ausgestaltungen der Erfindung sind in den abhängigen Patentansprüchen beschrieben.

Es wird besonders bevorzugt, wenn die Ventile elektrisch betätigte Schaltventile sind, die in einem nicht betätigten Zustand bzw. stromlos geschlossen sind. Somit schließen die Ventile auch bei Ausfall eines elektrischen Steuersignals.

Vorzugsweise sind die Ventile 2/2-Wegeventile.

Für eine optimale Dichtung bzw. minimale Leckage werden Ventile in Sitzbauweise bevorzugt. Damit sind Kolbenklemmer in geöffneter Stellung (Sitz gehoben) praktisch ausgeschlossen.

Um auch einen Ausfall einer dem jeweiligen Ventil zugeordneten Rückstellfeder tolerieren zu können wird es bevorzugt, wenn jeweils zwei redundante Rückstellfedern vorgesehen sind.

Bei einer Weiterbildung der erfindungsgemäßen Lenkung sind die Ventile von einer elektronischen Steuereinrichtung elektrisch pulsweitenmoduliert angesteuert.

Vorzugsweise sind zwei elektronische Steuergeräte vorgesehen, wobei zwei parallele Ventile der ersten Zuleitung und zwei parallele Ventile der zweiten Zuleitung und zwei parallele Ventile der ersten Rückleitung und zwei parallele Ventile der zweiten Rückleitung jeweils unabhängig voneinander durch eines der beiden elektronischen Steuergeräte steuerbar sind. Somit kann ein Ausfall eines Steuergerätes toleriert werden.

Wenn die beiden elektronischen Steuergeräte unabhängig von einander durch jeweils eine eigene elektrische Energiequelle versorgt werden, kann auch der Ausfall einer elektrischen Energiequelle toleriert werden.

Wenn die beiden elektronischen Steuergeräte jeweils mit einer unabhängigen redundanten Radsensorik verbunden sind, kann darüber hinaus ein Ausfall einer redundanten Radsensorik toleriert werden.

Ein bevorzugtes Anwendungsbeispiel der erfindungsgemäßen Lenkung ist eine Steer-by-Wire-Lenkung, bei der die elektronische Steuereinrichtung oder die beiden elektronischen Steuergeräte mit einer von einem Fahrzeugführer betätigten Lenkvorrichtung, vorzugsweise mit einem Lenkrad, über elektrische Signalleitungen verbunden sind.

Bei einer bevorzugten Weiterbildung sind die beiden Anschlüsse mit jeweils einer Kammer eines Lenkzylinders - aus Symmetriegründen vorzugsweise eines Gleichgangzylinders - verbunden.

Wenn die Druckmittelversorgung eine erste Pumpe und eine zweite Pumpe hat, die jeweils an die erste Zuleitung und an die zweite Zuleitung angeschlossen sind, kann ein Ausfall einer Pumpe toleriert werden.

Wenn alternativ die Druckmittelversorgung eine Pumpe und einen Druckmittelspeicher hat, die jeweils an die erste Zuleitung und an die zweite Zuleitung angeschlossen sind, kann auch ein Ausfall der Pumpe übergangsweise toleriert werden, da die Lenkung vom Druckmittel des Speichers betätigt bzw. betrieben werden kann.

Im Folgenden wird anhand der Figuren ein Ausführungsbeispiel der Erfindung detailliert beschrieben. Es zeigen:
Figur 1 ein hydraulisches Schaltbild eines Ausführungsbeispiels einer erfindungsgemäßen elektrohydraulischen Lenkung; und
Figur 2 ein elektrisches Schaltbild des Ausführungsbeispiels einer erfindungsgemäßen elektrohydraulischen Lenkung gemäß Figur 1.

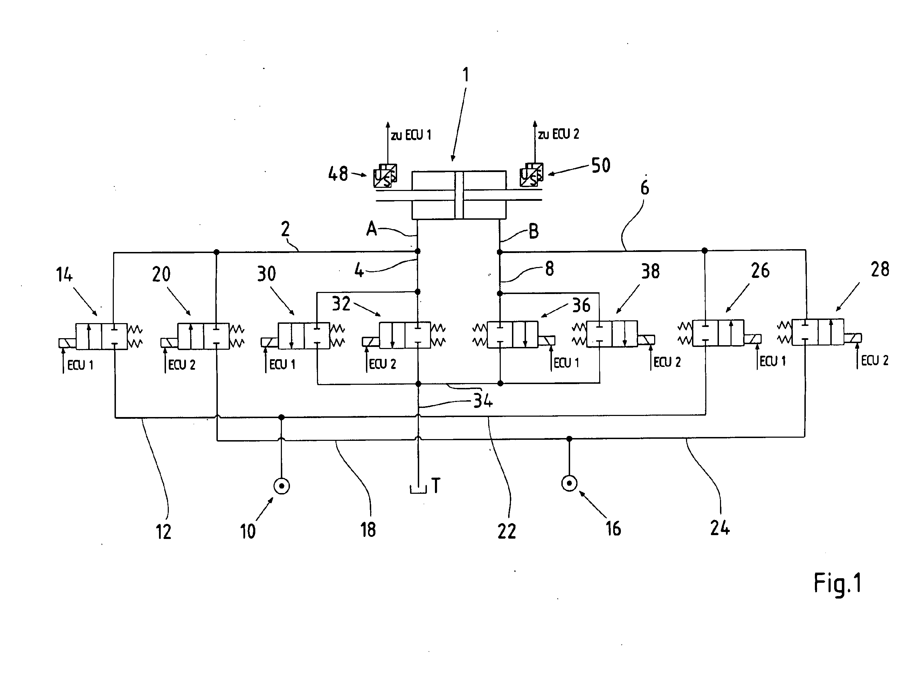

Figur 1 zeigt ein hydraulisches Schaltbild einer erfindungsgemäßen elektrohydraulischen Lenkung einer mobilen Arbeitsmaschine. Sie hat einen als Gleichgangzylinder ausgebildeten Lenkzylinder 1, über dessen Kolbenstangen die Lenkwinkel zweier (nicht gezeigter) Räder der mobilen Arbeitsmaschine eingestellt werden. Der Lenkzylinder 1 hat einen ersten Anschluss A, über den ein erster Druckraum des Lenkzylinders 1 mit einer ersten Zuleitung 2 und mit einer ersten Rückleitung 4 verbunden ist. Weiterhin hat der Lenkzylinder 1 einen zweiten Anschluss B, über den ein zweiter Druckraum mit einer zweiten Zuleitung 6 und mit einer zweiten Rückleitung 8 verbunden ist.

Die erfindungsgemäße elektrohydraulische Lenkung hat eine erste Pumpe 10, die über eine Pumpenleitung 12 und über ein 2/2-Wegeventil 14 mit der ersten Zuleitung 2 verbunden ist. Weiterhin ist eine zweite Pumpe 16 vorgesehen, die über eine Pumpenleitung 18 und über ein 2/2-Wegeventil 20 ebenfalls mit der ersten Zuleitung 2 verbunden ist.

Die beiden Pumpen 10, 16 sind außerdem über entsprechende Pumpenleitungen 22, 24 und über entsprechende 2/2-Wegeventile 26, 28 mit der zweiten Zuleitung 6 verbunden.

Die erste Rückleitung 4 ist über zwei parallel zueinander geschaltete 2/2-Wegeventile 30, 32 an eine Tankleitung 34 angeschlossen, während die zweite Rückleitung 8 über zwei parallel zueinander geschaltete 2/2-Wegeventile 36, 38 ebenfalls mit der Tankleitung 34 verbunden ist.

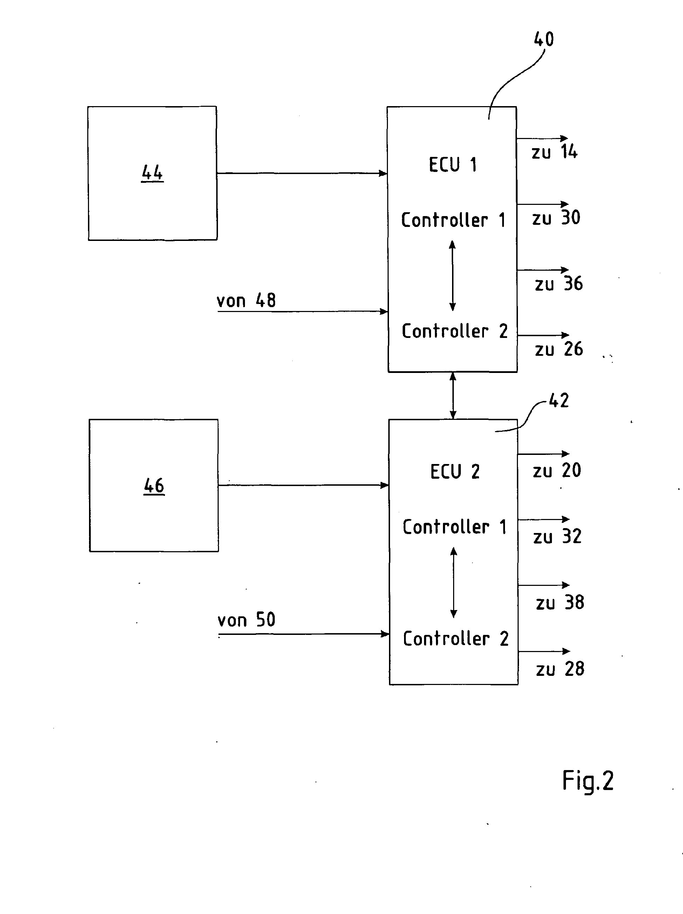

Die 2/2-Wegeventile 14, 20, 26, 28, 30, 32, 36, 38 sind jeweils in ihrer durch zwei redundante Rückstellfedern vorgespannten Grundstellung dargestellt, in der die jeweilige Druckmittelverbindung abgesperrt ist. Bei Aktivierung ihrer Elektromagneten durch ein elektronisches Steuergerät (vgl. Figur 2) werden die entsprechenden Kombinationen von Zuleitung 2 bzw. 6 und Rückleitung 8 bzw. 4 frei gegeben, so dass die Kolbenstangen des Lenkzylinders 1 verstellt und die Winkel der (nicht gezeigten) Räder eingestellt werden.

Figur 2 zeigt ein elektrisches Schaltbild des Ausführungsbeispiels einer erfindungs-gemäßen elektrohydraulischen Lenkung gemäß Figur 1.

Im Folgenden wird die elektronische Steuerung der erfindungsgemäßen elektrohydraulischen Lenkung mit Bezug zu den Figuren 1 und 2 erläutert.

Es sind zwei elektronische Steuergeräte (ECU) 40, 42 mit einer jeweiligen elektrischen Energiequelle 44, 46 vorgesehen. Das erste Steuergerät 40 dient zur Steuerung der beiden zulaufseitigen 2/2-Wegeventile 14, 26 und der beiden ablaufseitigen 2/2-Wegeventile 30, 36, während das zweite Steuergerät 42 zur Steuerung der jeweils dazu parallel geschalteten zulaufseitigen 2/2-Wegeventile 20, 28 und der ablaufseitigen 2/2-Wegeventile 32, 38 dient.

Weiterhin ist das erste Steuergerät 40 über eine Signalleitung mit einer ersten redundanten Radsensorik 48 verbunden, während das zweite Steuergerät 42 mit einer zweiten redundanten Radsensorik 50 verbunden ist. Diese sind wiederum redundant zueinander an den beiden mit einander gekoppelten Kolbenstangen des Lenkzylinders 1 angeordnet.

Zusammenfassend wird festgehalten, dass erfindungsgemäß folgende Komponenten jeweils redundant zueinander sind: das zulaufseitige Ventil 14 zum zulaufseitigen Ventil 20, das zulaufseitige Ventil 26 zum zulaufseitigen Ventil 28, das ablaufseitige Ventil 30 zum ablaufseitigen Ventil 32, das ablaufseitige Ventil 36 zum ablaufseitigen Ventil 38, die erste Pumpe 10 zur zweiten Pumpe 16, die erste redundante Radsensorik 48 zur zweiten redundanten Radsensorik 50, das erste Steuergerät 40 zum zweiten Steuergerät 42 und die erste elektrische Energiequelle 44 zur zweiten elektrischen Energiequelle 46.

Auf Grund der jeweils parallelen unabhängigen Versorgung der beiden Druckräume des Lenkzylinders 1 liegt in der Zuleitung 2 bzw. 6 Fehlertoleranz gegenüber einem Ventilklemmer der zulaufseitigen Ventile 14, 20, 26, 28 in unbetätigter Stellung vor. Entsprechend wird die erste Rückleitung 4 vom Anschluss A über zwei 2/2-Wegeventile 30, 32 und die zweite Rückleitung 8 des zweiten Anschlusses B über die beiden Ventile 36, 38 ebenfalls redundant und somit fehlertolerant gegenüber einem Ventilklemmer in unbetätigter Stellung freigegeben.

Ein weiterer Fehlerfall, der von der erfindungsgemäßen Lenkung abgedeckt wird, ist ein Ausfall einer hydraulischen oder elektrischen Energieversorgung 10, 16 bzw. 44, 46, da die Versorgungseinrichtungen 10, 16 bzw. 44, 46 zweifach integriert sind. Im Fehlerfall der ersten Pumpe 10 wird die Funktionalität über die Ventile 20 bzw. 28 und die zweite Pumpe 16 aufrecht erhalten. Bei Ausfall einer elektrischen Energiequelle 44, 46 übernimmt das von der redundanten Energiequelle 44, 46 versorgte Steuergerät 40, 42 die Regelung des Lenkzylinders 1 über die ihm zugeteilten Ventile 14, 20, 26, 28, 30, 32, 36, 38. Weiterhin werden dem ersten Steuergerät 40 die Daten der redundanten Radsensorik 48 und dem zweiten Steuergerät 42 die Daten der redundanten Radsensorik 50 übergeben. Im Fehlerfall einer Radsensorik 48, 50 übernimmt wiederum das Steuergerät 40, 42 die Regelung des Lenkzylinders 1 über die ihm zugeordneten Ventile 14, 20, 26, 28, 30, 32, 36, 38, dessen Radsensorik 48, 50 funktionsfähig ist. Darüber hinaus bestehen die beiden Steuergeräte 40, 42 jeweils aus einer Funktions- und einer Überwachungseinheit, die in Figur 2 mit "Controller 1" und "Controller 2" bezeichnet sind. Dadurch kann sich ein eventuell fehlerhaftes Steuergerät 40, 42 deaktivieren. Weiterhin findet gemäß Figur 2 zwischen den beiden Steuergeräten 40, 42 ein Crosscheck (vgl. Doppelpfeil) statt. Dieser dient dem Informationsaustausch hinsichtlich Fehlerfällen, die das jeweilige Steuergerät 40, 42, dessen elektrische Energiequelle 44, 46 oder die zugeordnete redundante Radsensorik 48, 50 betreffen.

Abweichend vom gezeigten Ausführungsbeispiel kann auch eine Pumpe 10, 16 durch einen Druckmittelspeicher ersetzt werden. Dieser wird über ein Speicherladeventil von der verbleibenden Pumpe 10, 16 versorgt.

Abweichend vom gezeigten Ausführungsbeispiel können auch jeweils mehr als zwei zueinander redundante Komponenten vorgesehen sein.

Offenbart ist eine elektrohydraulische Lenkung insbesondere für mobile Arbeitsmaschinen (z.B. aus der Land- und Forsttechnik, dem Erd- und Straßenbau oder für Material Handling) mit einer Druckmittelversorgung, von der über eine erste Zuleitung ein in eine erste Lenkrichtung wirksamer erster Anschluss versorgt werden kann, während über eine zweite Zuleitung ein in eine zweite Lenkrichtung wirksamer zweiter Anschluss versorgt werden kann. Dabei werden die beiden Zuleitungen und weiterhin eine erste Rückleitung vom ersten Anschluss zu einem Tank und eine zweite Rückleitung vom zweiten Anschluss zum Tank über jeweils mindestens zwei parallele Ventile gesteuert. Damit kann bei Ausfall eines der Ventile das zumindest eine parallel geschaltete Ventil die Steuerung der entsprechenden Zuleitungen oder der entsprechenden Rückleitung übernehmen.

### Bezugszeichenliste

- 1: Lenkzylinder
- 2: erste Zuleitung
- 4: erste Rückleitung
- 6: zweite Zuleitung
- 8: zweite Rückleitung
- 10: erste Pumpe
- 12: Pumpenleitung
- 14: 2/2-Wegeventil
- 16: zweite Pumpe
- 18: Pumpenleitung
- 20: 2/2-Wegeventil
- 22: Pumpenleitung
- 24: Pumpenleitung
- 26: 2/2-Wegeventil
- 28: 2/2-Wegeventil
- 30: 2/2-Wegeventil
- 32: 2/2-Wegeventil
- 34: Tankleitung
- 36: 2/2-Wegeventil
- 38: 2/2-Wegeventil
- 40: erstes Steuergerät
- 42: zweites Steuergerät
- 44: erste Energiequelle
- 46: zweite Energiequelle
- 48: erste Radsensorik
- 50: zweite Radsensorik

- T: Tank

## Patentansprüche

1. Elektrohydraulische Lenkung mit einer Druckmittelversorgung (10, 16), von der über eine erste Zuleitung (2) ein in eine erste Lenkrichtung wirksamer erster Anschluss (A) und über eine zweite Zuleitung (6) ein in eine zweite Lenkrichtung wirksamer zweiter Anschluss (B) versorgbar sind, **dadurch gekennzeichnet, dass** die beiden Zuleitungen (2, 6) und eine erste Rückleitung (4) vom ersten Anschluss (A) zu einem Tank (T) und eine zweite Rückleitung (8) vom zweiten Anschluss (B) zum Tank (T) über jeweils mindestens zwei parallele Ventile (14, 20, 26, 28, 30, 32, 36, 38) steuerbar sind.

2. Lenkung nach Anspruch 1, wobei die Ventile elektrisch betätigte Schaltventile (14, 20, 26, 28, 30, 32, 36, 38) sind, die in einem nicht betätigten Zustand geschlossen sind.

3. Lenkung nach Anspruch 1, wobei die Ventile 2/2-Wegeventile (14, 20, 26, 28, 30, 32, 36, 38) sind.

4. Lenkung nach Anspruch 1, wobei die Ventile (14, 20, 26, 28, 30, 32, 36, 38) in Sitzbauweise ausgeführt sind.

5. Lenkung nach Anspruch 1, wobei die Ventile (14, 20, 26, 28, 30, 32, 36, 38) jeweils zwei redundante Rückstellfedern haben.

6. Lenkung nach einem der Ansprüche 2 bis 5, wobei die Ventile (14, 20, 26, 28, 30, 32, 36, 38) von einer elektronischen Steuereinrichtung (40, 42) elektrisch pulsweitenmoduliert angesteuert sind.

7. Lenkung nach Anspruch 6, wobei die elektronische Steuereinrichtung zwei elektronische Steuergeräte (40, 42) hat, und wobei die beiden Ventile (14, 20) der ersten Zuleitung (2) und die beiden Ventile (26, 28) der zweiten Zuleitung (6) und die beiden Ventile (30, 32) der ersten Rückleitung (4) und die beiden Ventile (36, 38) der zweiten Rückleitung (8) jeweils unabhängig voneinander durch eines der beiden elektronischen Steuergeräte (40, 42) steuerbar sind.

8. Lenkung nach Anspruch 6, wobei die elektronische Steuereinrichtung zwei elektronische Steuergeräte (40, 42) hat, die unabhängig voneinander durch jeweils eine elektrische Energiequelle (44 ,46) versorgt sind.

9. Lenkung nach Anspruch 6, wobei die elektronische Steuereinrichtung zwei elektronische Steuergeräte (40, 42) hat, die jeweils mit einer unabhängigen redundanten Radsensorik (48, 50) verbunden sind.

10. Lenkung nach Anspruch 6, wobei die elektronische Steuereinrichtung (40, 42) mit einer von einem Fahrzeugführer betätigten Lenkvorrichtung elektrisch verbunden ist.

11. Lenkung nach Anspruch 1, wobei über die Anschlüsse (A, B) zwei Kammern eines Lenkzylinders (1) versorgbar sind.

12. Lenkung nach Anspruch 1, wobei die Druckmittelversorgung eine erste Pumpe (10) und eine zweite Pumpe (16) hat, die jeweils an die erste Zuleitung (2) und an die zweite Zuleitung (6) angeschlossen sind.

13. Lenkung nach Anspruch 1, wobei die Druckmittelversorgung eine Pumpe und einen Druckmittelspeicher hat, die jeweils an die erste Zuleitung und an die zweite Zuleitung angeschlossen sind.
